# FASCICULE DE BREVET EUROPEEN

(11) **EP 3 516 753 B1**
(45) Date de publication et mention de la délivrance du brevet: **17.02.2021**
(21) Numéro de dépôt: 17784359.6
(22) Date de dépôt: 20.09.2017
(51) Int. Cl.: H02J 7/00, G06F 1/26, H01M 10/44, H01M 10/48

(54) **PROCÉDÉ DE GESTION DE LA CHARGE D'UNE PLURALITÉ DE BATTERIES**
VERFAHREN ZUR VERWALTUNG DER LADUNG EINER VIELZAHL VON BATTERIEN
METHOD FOR MANAGING THE CHARGING OF A PLURALITY OF BATTERIES

(30) Priorité: 20.09.2016 FR 1658804
(43) Date de publication de la demande: 31.07.2019
(73) Titulaire: Commissariat à l'Énergie Atomique et aux Énergies Alternatives, 75015 Paris (FR)
(72) Inventeur: DELAILLE, Benjamin, 13008 Marseille (FR)
(74) Mandataire: Lebkiri, Alexandre
(86) Numéro de dépôt international: PCT/FR2017/052525
(87) Numéro de publication internationale: WO 2018/055291

(56) Documents cités:
- FR-A1- 2 691 022
- US-A- 6 031 356
- US-A1- 2009 284 225
- US-A1- 2014 167 699
- US-A1- 2015 295 430

## Description

### Domaine technique de l'invention

L'invention est relative à un procédé de gestion de la charge d'une pluralité de batteries.

### État de la technique

Dans le domaine des appareils électriques portatifs, il est fréquent d'utiliser plusieurs batteries à tour de rôle afin d'alimenter l'appareil. Cela peut notamment concerner l'outillage (perceuse, tondeuse, etc.), l'informatique (ordinateur, clavier, souris, etc.), la téléphonie, les appareils photos, les vélos électriques, etc.

L'utilisateur possède donc au moins une batterie connectée à l'appareil électrique, et au moins une autre batterie qui est déconnectée de l'appareil. La ou les batteries connectées à l'appareil électrique seront appelées par la suite batteries en cours d'utilisation, tandis que la ou les batteries déconnectées de l'appareil électrique seront appelées batteries de réserve.

Un utilisateur adopte généralement l'un des deux comportements suivants : soit la batterie de réserve est mise en charge lorsque la batterie de l'appareil électrique est quasiment ou complètement déchargée, soit la batterie de réserve est maintenue chargée en permanence jusqu'à ce que la batterie de l'appareil électrique soit complètement déchargée.

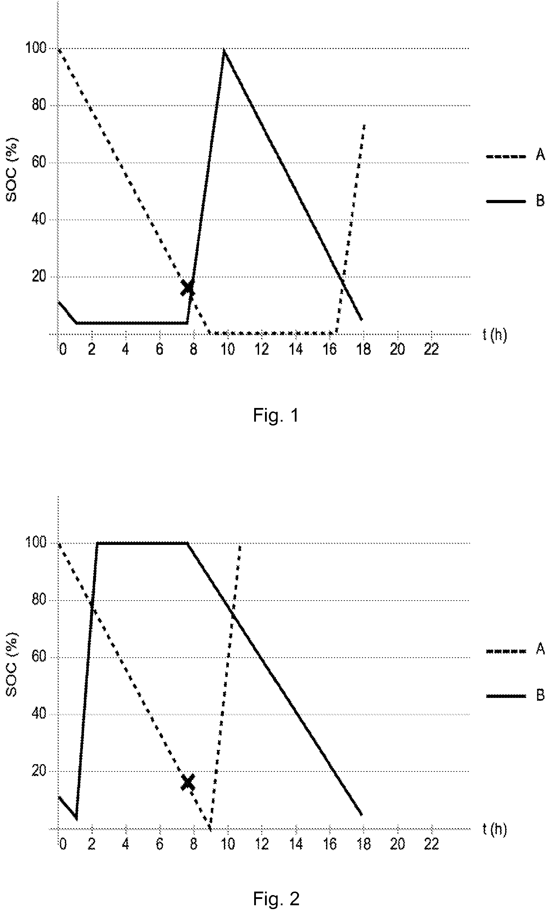

Ces deux attitudes peuvent se traduire par les graphes schématiques présentés en trait plein respectivement aux figures 1 et 2. Sur la figure 1, la batterie de réserve (courbe B en trait plein) est mise en charge lorsque l'état de charge (« state of charge » en anglais ou SOC) de la batterie en cours d'utilisation (courbe A en pointillés) atteint un niveau critique représenté par la croix sur la courbe A. Entre l'instant où la batterie en cours d'utilisation a atteint son état de charge critique et l'instant où la batterie de réserve est complètement chargée, l'appareil électrique ne peut être utilisé. En revanche, dès que la batterie de réserve a atteint un état de charge de 100%, les deux batteries sont interverties. Cela n'est pas acceptable car l'appareil électrique ne peut pas être utilisé de façon continue.

En alternative illustrée sur la figure 2, la batterie de réserve (courbe B en trait plein) est mise en charge bien avant que la batterie en cours d'utilisation (courbe A en pointillés) soit déchargée. L'état de charge de la batterie de réserve peut donc être de 100% pendant plusieurs heures avant que la batterie en cours d'utilisation atteigne un état de charge critique illustré par la croix sur la courbe A, et que les deux batteries soient interverties. L'inconvénient est que la batterie de réserve peut vieillir prématurément en étant toujours dans un état de charge maximal.

Dans les deux cas, le stockage de la batterie de réserve n'est pas optimal. Les documents US2014/167699, FR2691022 et US2015/295430 décrivent des solutions qui concernent la gestion d'une pluralité de batteries.

### Objet de l'invention

Un objet de l'invention consiste à proposer un procédé de gestion de la charge d'une pluralité de batteries permettant d'allonger la durée de vie des batteries et/ou d'augmenter le rendement énergétique de la charge. Ce but est atteint par des procédés de gestion de la charge d'une pluralité de batteries tels que définis par les revendications indépendantes 1 et 11. Des particularités du procédé défini dans la revendication 1 sont définies dans les revendications dépendantes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 illustrent graphiquement deux procédés classiquement mis en œuvre pour gérer la charge d'un couple de batteries utilisées pour alimenter à tour de rôle un appareil électrique,
- la figure 3 illustre, sous forme d'organigramme, une mise en œuvre possible du procédé,
- les figures 4 et 5 illustrent graphiquement deux alternatives de gestion de la charge d'un couple de batteries utilisées pour l'alimentation à tour de rôle d'un appareil électrique, lorsque la décharge de la batterie en cours d'utilisation est linéaire,
- les figures 6 à 8 illustrent graphiquement différentes alternatives de gestion de la charge d'un couple de batteries utilisées pour l'alimentation à tour de rôle d'un appareil électrique lorsque la décharge de la batterie en cours d'utilisation n'est pas linéaire.

### Description détaillée

Le procédé vise à améliorer la durée de vie d'une pluralité de batteries utilisées à tour de rôle afin d'alimenter électriquement un appareil électrique.

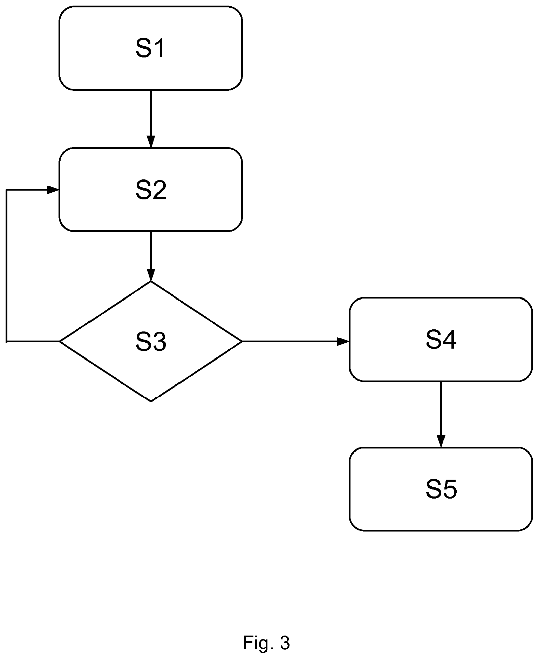

A cet effet, le procédé comporte tout d'abord une étape S1 (cf. figure 3) visant à fournir un appareil électrique ainsi qu'une pluralité de batteries destinées à alimenter l'appareil électrique. La pluralité de batteries comporte au moins une batterie connectée à l'appareil électrique et considérée comme étant une batterie en cours d'utilisation. La pluralité de batteries comporte également au moins une batterie déconnectée de l'appareil électrique et considérée comme étant une batterie de réserve.

Notons que la pluralité de batteries peut éventuellement comprendre des batteries qui ne sont ni en réserve, ni en cours d'utilisation. Cela peut par exemple être le cas lorsque des batteries sont en maintenance.

Pour simplifier la rédaction, nous considérons le cas où le procédé concerne la gestion d'une pluralité de batteries comprenant une batterie en cours d'utilisation et une batterie de réserve. Comme on le verra plus loin, l'invention s'étend cependant à un nombre quelconque de batteries en cours d'utilisation et un nombre quelconque de batteries de réserve.

Dans l'étape S1 de la mise en œuvre du procédé, la batterie de réserve se trouve à un état de charge intermédiaire prédéterminé qui ne correspond ni à un état de charge complet, ni à un état de décharge total (c'est-à-dire à un état de charge nul). De manière avantageuse, l'état de charge intermédiaire prédéterminé est compris entre un état de charge minimal autorisé et un état de charge maximal autorisé.

Cet état de charge intermédiaire prédéterminé correspond à un état de charge d'attente de la batterie de réserve. La valeur de l'état de charge intermédiaire prédéterminé peut notamment être choisi en fonction du type de batterie (plomb-acide, lithium-ion, NiMH, etc.) et des conditions de stockage de la batterie (température, humidité, etc.) de sorte à optimiser sa durée de vie et/ou réduire voire éviter le phénomène d'autodécharge de la batterie.

Afin d'être rapidement opérationnelle, la batterie de réserve est à un état de charge intermédiaire prédéterminé. Celui-ci peut par exemple être compris entre 50 et 80%, être préférentiellement compris entre 70 et 80% et être idéalement égal à 80%. La valeur de l'état de charge intermédiaire peut être fonction de la température de la batterie et/ou de la température extérieure. La température peut être mesurée au moyen d'un thermomètre.

Les inventeurs ont observé que pour les batteries de type Lithium-ion, l'utilisation d'un état de charge intermédiaire permet de réduire fortement le phénomène de vieillissement calendaire. Les inventeurs ont également observé que pour les batteries de type Nickel - hydrure métallique, l'utilisation d'un état de charge intermédiaire permet de réduire fortement le phénomène d'autodécharge.

Dans une étape S2, au moins un paramètre représentatif de la batterie en cours d'utilisation est déterminé. Ce paramètre représentatif peut par exemple être un paramètre électrique, la température de la batterie, etc.

De manière avantageuse, le paramètre déterminé est un paramètre caractéristique de l'état de charge de la batterie ou un paramètre représentatif du temps de décharge avant d'atteindre un état de charge minimal. Le paramètre caractéristique de l'état de charge de la batterie peut être obtenu par la mesure d'une ou plusieurs grandeurs relatives à la batterie et notamment de grandeurs électriques telles que la tension aux bornes de la batterie et le courant circulant depuis ou à destination de la batterie.

La mesure d'un ou plusieurs paramètres électriques est réalisée au moyen d'un dispositif de mesure. Le dispositif de mesure peut être configuré pour mesurer la tension aux bornes de la batterie et/ou le courant qui circule en provenance/à destination de la batterie.

Lors de l'étape S2, l'état de charge de la batterie est avantageusement déterminé. Cependant, d'autres paramètres électriques peuvent également être déterminés. Il est possible de déterminer la vitesse d'évolution de l'état de charge en fonction du temps ou encore de la température de la batterie, parfois utilisée comme critère d'arrêt de l'utilisation d'une batterie.

Une autre alternative est de déterminer le temps de décharge restant avant d'arriver à un état de charge minimal. Le nombre de paramètres électriques à déterminer à partir de la batterie en cours d'utilisation peut être choisi selon le type de batterie employé, la précision du résultat souhaité, le type d'appareil électrique ou l'application de l'appareil électrique etc.

Dans une étape S3, la valeur du paramètre représentatif de la batterie en cours d'utilisation est comparée à un seuil prédéterminé. Cette comparaison permet de déterminer si la batterie en cours d'utilisation doit être remplacée prochainement ou pas, c'est-à-dire si son état de charge est proche de l'état de charge minimal, ou encore si la température de la batterie en cours d'utilisation est proche de la température d'arrêt.

La comparaison peut être réalisée par un circuit de commande. Si le circuit de commande détermine que la batterie en cours d'utilisation doit être remplacée bientôt, le circuit de commande en déduit également que la batterie de réserve doit être chargée à l'état de charge maximal. De cette façon, la batterie en cours d'utilisation peut être remplacée sans qu'il n'y ait de période de rupture dans l'utilisation de l'appareil électrique.

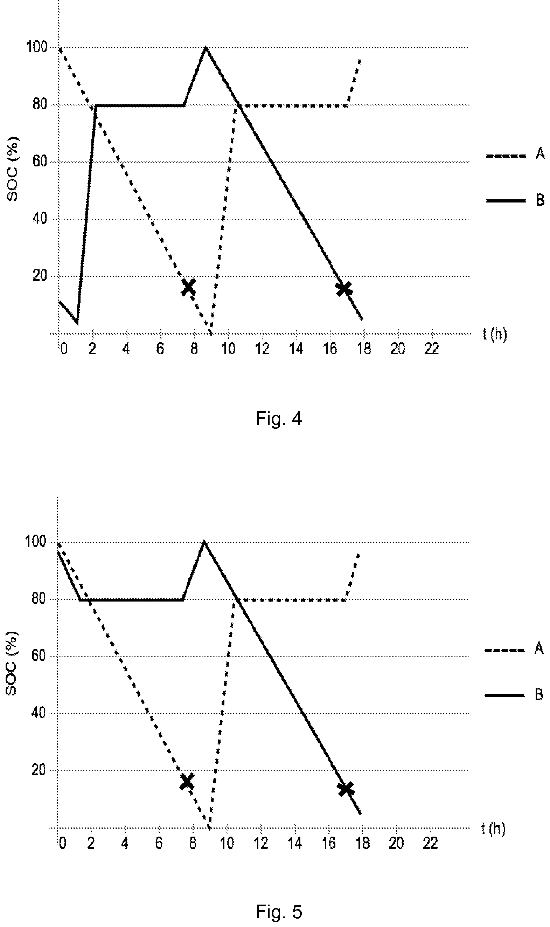

Le seuil prédéterminé est symbolisé par les croix placées sur les courbes A des figures 4 et 5. Il peut être choisi en fonction des caractéristiques électriques de la batterie de réserve et de la batterie en cours d'utilisation, de sorte que l'état de charge de la batterie de réserve atteigne un maximum prédéterminé lorsque la batterie en cours d'utilisation atteint l'état de charge minimal prédéterminé ou est proche de l'état de charge minimal prédéterminé.

En fonction du résultat de la comparaison, la charge d'une batterie de réserve jusqu'à un état de charge maximal prédéterminé supérieur à l'état de charge intermédiaire prédéterminé peut être déclenchée.

Si le circuit de commande détermine que la valeur représentative de la batterie en cours d'utilisation n'atteint pas la valeur seuil, le procédé revient à l'étape S2. Si la charge de la batterie de réserve n'est pas nécessaire, l'état de charge intermédiaire prédéterminé est maintenu. Le maintien dans l'état de charge intermédiaire est symbolisé par la partie plate des courbes B des figures 4 et 5.

Dans un exemple de réalisation, la valeur représentative de la batterie en cours d'utilisation est l'état de charge, alors ce paramètre est comparé à un état de charge seuil. L'état de charge seuil est supérieur à l'état de charge minimal en dessous duquel la batterie en cours d'utilisation risque d'être dégradée. La valeur de l'état de charge seuil peut également être pondérée en fonction de la vitesse de décharge théorique de la batterie, et de la vitesse de charge théorique de la batterie de réserve si cette dernière évolue dans le temps.

Dans un autre exemple de réalisation, la valeur représentative de la batterie en cours d'utilisation est le temps de décharge restant avant d'atteindre l'état de charge minimal, c'est-à-dire la déconnexion de la batterie en cours d'utilisation, alors ce paramètre peut être comparé à un temps seuil. Ce temps seuil correspond avantageusement à la durée nécessaire pour atteindre l'état de charge maximal prédéterminé de la batterie de réserve. Ce temps seuil peut être une valeur fixe ou une valeur qui est fonction de la vitesse de charge de la batterie de réserve.

De manière avantageuse, la valeur seuil peut être modulée par un coefficient permettant de garantir que la batterie de réserve est totalement chargée lorsqu'elle sera connectée à l'appareil électrique.

Tant que la batterie en cours d'utilisation n'a pas atteint le seuil prédéterminé, le circuit de commande en déduit que le remplacement de la batterie en cours d'utilisation n'est pas imminent. En conséquence, il n'est pas nécessaire de charger la batterie de réserve au-delà de l'état de charge intermédiaire, c'est-à-dire au delà d'une valeur qui va entraîner de l'autodécharge et/ou du vieillissement calendaire.

Si le circuit de commande détermine que la valeur du paramètre caractéristique de l'état de charge de la batterie en cours d'utilisation atteint la valeur seuil prédéterminée, le procédé atteint l'étape S4. Le circuit de commande prévoit le remplacement imminent de la batterie en cours d'utilisation en initiant la charge de la batterie de réserve. La batterie de réserve est chargée depuis son état de charge intermédiaire jusqu'à un état de charge maximal qui est avantageusement un état de charge complet. Le vieillissement calendaire et/ou l'autodécharge sont limités car l'utilisation de la batterie de réserve est immédiate ou proche dans le temps après avoir atteint l'état de charge maximal.

Le déclenchement de la charge de la batterie de réserve est initié jusqu'à l'état de charge maximal. La charge de la batterie de réserve est symbolisée par les ruptures de pente des courbes B des figures 4 et 5, ruptures de pente dont les abscisses coïncident avec celles des croix positionnées sur les courbes A correspondantes.

L'état de charge maximal de la batterie de réserve peut quant à lui être compris entre 90% et 100%, ou être inférieur afin d'augmenter sa durée de vie. L'état de charge complet est égal à 100%.

De cette façon, le vieillissement des batteries est ralenti et l'autodécharge de la batterie de réserve est évitée. La batterie de réserve est chargée et disponible au bon moment, ce qui permet également à l'utilisateur de faire usage de l'appareil électrique de façon continue.

L'état de charge minimal prédéterminé de la batterie en cours d'utilisation peut avantageusement être choisi pour éviter une dégradation prématurée de la batterie. L'état de charge minimal prédéterminé peut être compris entre 0% et 20% et idéalement être égal à 10%. Le circuit de commande est configuré pour déconnecter la batterie en cours d'utilisation lorsque l'état de charge minimal est atteint ou avant d'atteindre l'état de charge minimal.

Dans un premier cas de figure, lorsque la batterie en cours d'utilisation atteint l'état de charge minimal prédéterminé, la batterie en cours d'utilisation est déconnectée et forme éventuellement une nouvelle batterie de réserve. La batterie de réserve est connectée afin de former la nouvelle batterie en cours d'utilisation. Par exemple, le circuit de commande peut initier la déconnexion de la batterie en cours d'utilisation et connecter la batterie de réserve. Ce processus correspond à l'étape S5 du procédé. Dans le cas où la batterie déconnectée devient une nouvelle batterie de réserve, alors cette dernière peut être chargée jusqu'à atteindre l'état de charge intermédiaire prédéterminé, afin d'alimenter l'appareil électrique à l'avenir.

Dans un deuxième cas de figure, lorsque la batterie de réserve atteint l'état de charge maximal, la batterie de réserve est connectée afin de former la nouvelle batterie en cours d'utilisation. La batterie en cours d'utilisation est déconnectée et forme éventuellement une nouvelle batterie de réserve avant d'atteindre l'état de charge minimal prédéterminé.

Idéalement, l'instant où la batterie en cours d'utilisation atteint l'état de charge minimal prédéterminé coïncide avec l'instant où la batterie de réserve atteint l'état de charge maximal prédéterminé.

L'état de charge de la batterie de réserve ou un autre paramètre électrique représentatif de l'état de charge peut également être mesuré. De manière préférentielle, la mesure est périodique. La mesure de l'état de charge de la batterie de réserve ou de l'autre paramètre électrique représentatif de l'état de charge est avantageusement obtenue au moyen du circuit de mesure utilisé pour mesurer la batterie en cours d'utilisation.

Si la batterie de réserve a un état de charge inférieur à l'état de charge intermédiaire prédéterminé, alors cette dernière peut être chargée afin d'atteindre l'état de charge intermédiaire prédéterminé. Cela correspond au cas de figure de la courbe B du graphe de la figure 4. En revanche si la batterie de réserve a un état de charge initial supérieur à l'état de charge intermédiaire prédéterminé, alors cette dernière peut être déchargée soit par relaxation naturelle, soit par une décharge forcée en alimentant un équipement électrique annexe. Cela correspond au cas de figure de la courbe B de la figure 5. Si la batterie de réserve se trouve à l'état de charge intermédiaire prédéterminé, la batterie de réserve peut être déconnectée d'un chargeur configuré pour charger la batterie de réserve. La batterie de réserve peut également être déconnectée de l'appareil électrique annexe à alimenter.

Durant, l'étape S2, l'état de charge de la batterie de réserve est avantageusement déterminé de manière régulière. Si l'état de charge devient inférieur à un état de charge seuil prédéterminé, alors la batterie de réserve est à nouveau chargée jusqu'à atteindre l'état de charge intermédiaire prédéterminé. L'état de charge seuil prédéterminé peut par exemple être compris entre 90% et 98% de l'état de charge intermédiaire prédéterminé.

Lorsque la batterie en cours d'utilisation et la batterie de réserve ont des capacités identiques, l'état de charge peut être utilisé comme paramètre représentatif. Si la batterie en cours d'utilisation et la batterie de référence ont des capacités différentes, il peut être judicieux d'utiliser le temps de décharge restant avant d'arriver à un niveau de décharge minimal prédéterminé comme paramètre de référence.

L'utilisation du temps de décharge restant permet d'adapter la mise en œuvre du procédé à n'importe quel type de batterie, il suffit de savoir combien de temps il faut prévoir pour charger complètement la batterie de réserve, et d'adapter le seuil prédéterminé pour la batterie en cours d'utilisation qui va provoquer le déclenchement de la charge de la batterie de réserve.

La vitesse de décharge de la batterie en cours d'utilisation peut varier au cours du temps, par exemple lorsque l'appareil est utilisé de façon intensive pendant une certaine durée, puis est peu utilisé pendant une autre durée. Dans ce cas, si la charge de la batterie de réserve est réalisée de manière linéaire (comme illustré sur les figures 4 et 5), il est possible que la batterie de réserve atteigne l'état de charge maximal prédéterminé avant que la batterie en cours d'utilisation atteigne l'état de charge minimal prédéterminé. A l'inverse, il est possible que la batterie de réserve n'ait pas encore atteint l'état de charge maximal prédéterminé lorsque la batterie en cours d'utilisation atteint l'état de charge minimal prédéterminé.

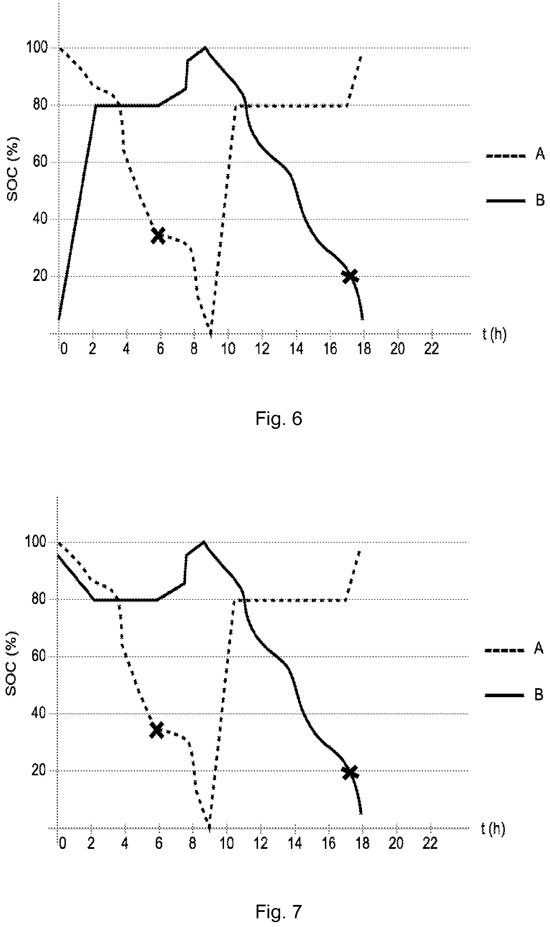

Aussi, pour remédier à ce problème et garantir une utilisation optimale de la pluralité de batteries, la vitesse de charge de la batterie de réserve peut être asservie à la vitesse de décharge de la batterie en cours d'utilisation dès lors que la batterie de réserve doit être chargée jusqu'à l'état de charge maximal prédéterminé. Ce mode de mise en œuvre est illustré sur les figures 6 et 7, dans le cas où la batterie de réserve a un état de charge initial inférieur à l'état de charge intermédiaire prédéterminé, et dans le cas où la batterie de réserve a un état de charge initial supérieur à l'état de charge intermédiaire prédéterminé.

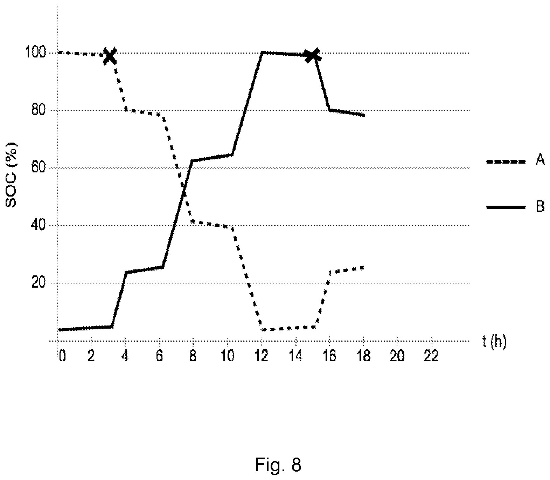

Selon un mode de mise en œuvre particulier illustré à la figure 8, il est envisageable de considérer que l'état de charge intermédiaire prédéterminé de la batterie de réserve ne soit que de quelques pourcents, et que le seuil prédéterminé coïncide avec un état de charge maximal de la batterie en cours d'utilisation. Dans ce cas, dès que l'état de charge de la batterie en cours d'utilisation commence à diminuer, la charge de la batterie de réserve jusqu'à un état de charge maximal prédéterminé est déclenchée. Afin que la batterie de réserve atteigne l'état de charge maximal prédéterminé lorsque la batterie en cours d'utilisation atteint un état de charge minimal prédéterminé, la vitesse de charge de la batterie de réserve peut être asservie à la vitesse de décharge de la batterie en cours d'utilisation. Cela garantit un fonctionnement optimal du couple de batteries alimentant l'appareil électrique à tour de rôle, ce qui permet d'augmenter leur durée de vie.

Selon un aspect de l'invention, la gestion de la charge de la batterie de réserve peut être réalisée par l'intermédiaire d'un circuit de commande comportant un serveur de données. Ce dernier peut solliciter la détermination à intervalles réguliers d'une valeur représentative de la batterie en cours d'utilisation, puis comparer la valeur reçue au seuil prédéterminé. En fonction de la comparaison, le circuit de commande peut également déclencher la charge de la batterie de réserve jusqu'à l'état de charge maximal prédéterminé. Le serveur de données peut également solliciter la détermination à intervalles réguliers de l'état de charge de la batterie de réserve afin de s'assurer qu'il correspond bien à l'état de charge intermédiaire prédéterminé.

L'intervalle de temps entre deux mesures d'état de charge de la batterie en cours d'utilisation ou de la batterie de réserve peut être inférieur à 15 min, de préférence inférieur à 10 min et idéalement inférieur à 1 min.

Le ou les circuits de mesure de la batterie en cours d'utilisation et de la batterie de réserve sont connectés au serveur de données via un réseau de communication. Le chargeur de la batterie de réserve peut également être connecté au circuit de commande comportant avantageusement le serveur de données via le réseau de communication.

La sollicitation des informations par le serveur de données à destination des batteries, l'envoi des données par les batteries au serveur de données, et le déclenchement de la charge de la batterie de réserve (pour retrouver l'état de charge intermédiaire prédéterminé ou pour atteindre l'état de charge maximal prédéterminé) peuvent être réalisé via le réseau de communication. Ce dernier peut être de préférence un réseau sans fil tel qu'un réseau internet des objets (« Internet of things » ou IoT en anglais), un réseau wifi, un réseau GSM, un réseau Bluetooth®, un réseau sigsox, etc.

L'invention ne se limite pas au cas où la pluralité de batteries ne comporte qu'une seule batterie en cours d'utilisation et une seule batterie de réserve. L'invention concerne également le cas où la pluralité de batteries comprend un nombre N quelconque de batteries en cours d'utilisation et un nombre M quelconque de batteries de réserve, N et M étant des nombres entiers identiques ou différents et supérieurs ou égaux à 1.

Dans ce cas, au moins une valeur de paramètre caractéristique de l'état de charge est déterminée pour chacune des N batteries en cours d'utilisation (étape S2 de l'organigramme de la figure 3). Les valeurs des paramètres électriques peuvent être déterminées simultanément ou successivement pour toutes les batteries en cours d'utilisation.

Ensuite, chaque valeur de paramètre caractéristique de l'état de charge est comparée à un seuil prédéterminé spécifique pour chacune des N batteries en cours d'utilisation (étape S3 de la mise en œuvre). Le seuil prédéterminé peut être différent d'une batterie en cours d'utilisation à une autre car ce seuil être adapté en fonction du type de batterie, de sa capacité, de son état de santé (« state of health » ou SOH en anglais), etc.

S'il existe plus de batteries en cours d'utilisation que de batteries de réserve, c'est-à-dire si le nombre N de batteries en cours d'utilisation est plus grand que le nombre M de batteries de réserve (N>M), M batteries en cours d'utilisation parmi les N batteries peuvent potentiellement être remplacées.

Si un nombre P compris entre 1 et M-1 de batteries en cours d'utilisation doivent être changées de façon imminente, alors P batteries de réserve parmi les M batteries de réserve peuvent être choisies de manière aléatoire. Il est alors avantageux de charger les P batteries de réserve simultanément. Les états de charge des M batteries de réserve peuvent être différents, et compris entre 90% et 100% de l'état de charge intermédiaire prédéterminé. Il existe alors des batteries plus chargées que d'autres parmi les M batteries de réserve. Dans ce cas, les états de charge des M batteries de réserve peuvent être distingués, et les P batteries de réserve choisies pour remplacer les batteries en cours d'utilisation sont celles dont les états de charge sont les plus élevés.

Quelle que soit la méthode choisie pour sélectionner les P batteries parmi les M batteries de réserve, celles-ci sont mises en charge jusqu'à ce qu'elles atteignent leur état de charge maximal prédéterminé, leurs charges pouvant être réalisées de façon simultanée. L'état de charge maximal prédéterminé peut être différent d'une batterie de réserve à une autre car il peut être adapté en fonction du type de batterie, de sa capacité ou de son état de santé (« state of health » ou SOH en anglais) afin de garantir sa longévité.

Si un nombre P égal à M de batteries en cours d'utilisation doivent être changées parmi les N batteries en cours d'utilisation, alors la charge des M batteries de réserve est réalisée jusqu'à ce qu'elles atteignent leur état de charge maximal prédéterminé.

Si le nombre N de batteries en cours d'utilisation est supérieur au nombre M de batteries de réserve, il peut arriver qu'un nombre P supérieur à M de batteries en cours d'utilisation doivent être changées de manière imminente. Faute d'avoir assez de batteries de réserve disponible, il est impossible d'intervertir toutes les batteries en cours d'utilisation par des batteries de réserve.

Dans ce cas, M batteries parmi les P batteries en cours d'utilisation doivent être sélectionnées pour être changées. Selon une première méthode, les M batteries peuvent être choisies parmi les P batteries de façon aléatoire. Selon une méthode alternative, les états de charge des P batteries en cours d'utilisation et devant être changées peuvent être comparés, et la priorité peut être donnée aux M batteries ayant les états de charge les plus faibles.

Si les N batteries en cours d'utilisation et les M batteries de réserve n'ont pas toutes la même capacité, alors pour chaque batterie en cours d'utilisation et devant être remplacée, la priorité de charge peut être donnée à une batterie de réserve ayant la même capacité, ou ayant la capacité la plus proche de la batterie en cours d'utilisation. La batterie en cours d'utilisation et la batterie de réserve peuvent alors former un couple de batteries adapté pour alimenter un certain type d'appareil électrique.

Si plusieurs batteries de réserve ont la même capacité que la batterie en cours d'utilisation et devant être remplacée, alors la priorité est donnée à la batterie de réserve la plus chargée parmi celles ayant la même capacité.

Selon un mode de réalisation avantageux, le nombre N de batteries en cours d'utilisation et le nombre M de batteries de réserve peuvent être identiques, de sorte à former N couples de batteries. L'appareil électrique est alors alimenté à tour de rôle par une batterie en cours d'utilisation et par une batterie de réserve.

## Revendications

1. Procédé de gestion de la charge d'une pluralité de batteries comportant les étapes suivantes :
• fournir (S1) au moins une batterie connectée à un appareil électrique et formant au moins une batterie en cours d'utilisation,
• fournir (S1) au moins une batterie déconnectée de l'appareil électrique et formant au moins une batterie de réserve, la batterie de réserve ayant un état de charge intermédiaire prédéterminé, différent d'un état de charge complet et d'un état de charge nul,
• déterminer (S2) au moins une valeur de paramètre caractéristique de l'état de charge de la batterie en cours d'utilisation,
• comparer (S3) la valeur du paramètre caractéristique de l'état de charge de la batterie en cours d'utilisation à un seuil prédéterminé, si la valeur du paramètre caractéristique de l'état de charge de la batterie en cours d'utilisation n'atteint pas le seuil prédéterminé, revenir à l'étape précédente (S2), et sinon,
• déclencher (S4) la charge de la batterie de réserve jusqu'à un état de charge maximal prédéterminé, supérieur à l'état de charge intermédiaire prédéterminé, puis, lorsque la batterie en cours d'utilisation atteint un état de charge minimal prédéterminé, les étapes suivantes :
• déconnecter (S5) la batterie en cours d'utilisation de l'appareil électrique,
• connecter (S5) la batterie de réserve à l'appareil électrique pour former une nouvelle batterie en cours d'utilisation.

2. Procédé de gestion de la charge d'une pluralité de batteries selon la revendication 1, dans lequel la batterie en cours d'utilisation déconnectée forme une nouvelle batterie de réserve et dans lequel la nouvelle batterie de réserve est chargée jusqu'à atteindre l'état de charge intermédiaire prédéterminé.

3. Procédé de gestion de la charge d'une pluralité de batteries selon l'une des revendications 1 et 2, dans lequel l'état de charge intermédiaire prédéterminé d'une batterie de réserve est compris entre 50 % et 80 %.

4. Procédé de gestion de la charge d'une pluralité de batteries selon l'une quelconque des revendications 1 à 3, dans lequel la vitesse de charge de la batterie de réserve est asservie à la vitesse de décharge de la batterie en cours d'utilisation, de sorte que la batterie de réserve atteigne l'état de charge maximal prédéterminé lorsque la batterie en cours d'utilisation atteint l'état de charge minimal prédéterminé.

5. Procédé de gestion de la charge d'une pluralité de batteries selon l'une quelconque des revendications 1 à 4, dans lequel l'état de charge maximal prédéterminé de la batterie de réserve est compris entre 90 et 100%.

6. Procédé de gestion de la charge d'une pluralité de batteries selon l'une quelconque des revendications 1 à 5, dans lequel le paramètre caractéristique de l'état de charge de la batterie en cours d'utilisation est choisi parmi l'état de charge de la batterie en cours d'utilisation, et/ou la vitesse d'évolution de l'état de charge de la batterie en cours d'utilisation en fonction du temps, et/ou le temps de décharge restant de la batterie en cours d'utilisation.

7. Procédé de gestion de la charge d'une pluralité de batteries selon l'une quelconque des revendications 1 à 5, dans lequel la batterie en cours d'utilisation et la batterie de réserve ont des capacités identiques.

8. Procédé de gestion de la charge d'une pluralité de batteries selon l'une quelconque des revendications 1 à 7, dans lequel la batterie en cours d'utilisation et la batterie de réserve sont connectées à un serveur de données par l'intermédiaire d'un réseau de communication.

9. Procédé de gestion de la charge d'une pluralité de batteries selon l'une quelconque des revendications 1 à 8, dans lequel la pluralité de batteries comprend N batteries en cours d'utilisation et N batteries de réserve formant N couples de batteries, l'appareil électrique étant alimenté alternativement par une batterie en cours d'utilisation et une batterie de réserve de l'un des N couples de batteries.

10. Procédé de gestion de la charge d'une pluralité de batteries selon l'une quelconque des revendications 1 à 9, dans lequel le seuil prédéterminé est choisi en fonction des caractéristiques électriques de la batterie de réserve et de la batterie en cours d'utilisation, de sorte que l'état de charge de la batterie de réserve atteigne l'état de charge maximal prédéterminé lorsque la batterie en cours d'utilisation atteint l'état de charge minimal prédéterminé.

11. Procédé de gestion de la charge d'une pluralité de batteries comportant les étapes suivantes :
• fournir (S1) au moins une batterie connectée à un appareil électrique et formant au moins une batterie en cours d'utilisation,
• fournir (S1) au moins une batterie déconnectée de l'appareil électrique et formant au moins une batterie de réserve, la batterie de réserve ayant un état de charge intermédiaire prédéterminé, différent d'un état de charge complet et d'un état de charge nul,
• déterminer (S2) au moins une valeur de paramètre caractéristique de l'état de charge de la batterie en cours d'utilisation,
• comparer (S3) la valeur du paramètre caractéristique de l'état de charge de la batterie en cours d'utilisation à un seuil prédéterminé, si la valeur du paramètre caractéristique de l'état de charge de la batterie en cours d'utilisation n'atteint pas le seuil prédéterminé, revenir à l'étape précédente (S2), et sinon,
• déclencher (S4) la charge d'une batterie de réserve jusqu'à un état de charge maximal prédéterminé, supérieur à l'état de charge intermédiaire prédéterminé, puis, lorsque la batterie de réserve atteint l'état de charge maximal prédéterminé, les étapes suivantes :
• déconnecter (S5) la batterie en cours d'utilisation de l'appareil électrique,
• connecter (S5) la batterie de réserve à l'appareil électrique pour former une nouvelle batterie en cours d'utilisation.

## Patentansprüche

1. Verwaltungsverfahren der Ladung einer Vielzahl von Batterien, umfassend die folgenden Schritte:
• Liefern (S1) wenigstens einer Batterie, die an ein Elektrogerät angeschlossen ist und wenigstens eine Batterie in der Nutzung bildet,
• Liefern (S1) wenigstens einer Batterie, die von dem Elektrogerät abgehängt ist und wenigstens eine Reservebatterie bildet, wobei die Reservebatterie einen vorbestimmten Zwischenlade-Zustand aufweist, der von einem vollständigen Ladezustand und einem Null-Ladezustand unterschiedlich ist,
• Bestimmen (S2) wenigstens eines charakteristischen Parameterwertes des Ladezustandes der Batterie in der Nutzung,
• Vergleichen (S3) des Wertes des charakteristischen Parameters des Ladezustandes der Batterie in der Nutzung mit einem vorbestimmten Schwellenwert, wenn der Wert des charakteristischen Parameters des Ladezustandes der Batterie in der Nutzung nicht den vorbestimmten Schwellenwert erreicht, Zurückkehren in den vorherigen Schritt (S2) und andernfalls
• Auslösen (S4) der Ladung der Reservebatterie bis zu einem vorbestimmten maximalen Ladezustand, der den vorbestimmten Zwischenlade-Zustand übersteigt,
dann, wenn die Batterie in der Nutzung einen vorbestimmten minimalen Ladezustand erreicht, die folgenden Schritte:
• Abhängen (S5) der Batterie in der Nutzung von dem Elektrogerät,
• Anschließen (S5) der Reservebatterie an das Elektrogerät zum Bilden einer neuen Batterie in der Nutzung.

2. Verwaltungsverfahren der Ladung einer Vielzahl von Batterien gemäß Anspruch 1, bei dem die abgehängte Batterie in der Nutzung eine neue Reservebatterie bildet und bei der die neue Reservebatterie geladen wird, bis der vorbestimmte Zwischenlade-Zustand erreicht wird.

3. Verwaltungsverfahren der Ladung einer Vielzahl von Batterien gemäß einem der Ansprüche 1 und 2, bei dem der vorbestimmte Zwischenlade-Zustand einer Reservebatterie zwischen 50 % und 80 % inbegriffen ist.

4. Verwaltungsverfahren der Ladung einer Vielzahl von Batterien gemäß irgendeinem der Ansprüche 1 bis 3, bei dem die Ladegeschwindigkeit der Reservebatterie der Entladegeschwindigkeit der Batterie in der Nutzung derart untergeordnet ist, dass die Reservebatterie den vorbestimmten maximalen Ladezustand erreicht, wenn die Batterie in der Nutzung den vorbestimmten minimalen Ladezustand erreicht.

5. Verwaltungsverfahren der Ladung einer Vielzahl von Batterien gemäß irgendeinem der Ansprüche 1 bis 4, bei dem der vorbestimmte maximale Ladezustand der Reservebatterie zwischen 90 und 100 % inbegriffen ist.

6. Verwaltungsverfahren der Ladung einer Vielzahl von Batterien gemäß irgendeinem der Ansprüche 1 bis 5, bei dem der charakteristische Parameter des Ladezustandes der Batterie in der Nutzung aus dem Ladezustand der Batterie in der Nutzung und / oder der Entwicklungsgeschwindigkeit des Ladezustandes der Batterie in der Nutzung in Abhängigkeit von der Zeit und / oder der verbleibenden Entladezeit der Batterie in der Nutzung ausgewählt wird.

7. Verwaltungsverfahren der Ladung einer Vielzahl von Batterien gemäß irgendeinem der Ansprüche 1 bis 5, bei dem die Batterie in der Nutzung und die Reservebatterie identische Kapazitäten aufweisen.

8. Verwaltungsverfahren der Ladung einer Vielzahl von Batterien gemäß irgendeinem der Ansprüche 1 bis 7, bei dem die Batterie in der Nutzung und die Reservebatterie mittels eines Kommunikationsnetzes an einen Datenserver angeschlossen werden.

9. Verwaltungsverfahren der Ladung einer Vielzahl von Batterien gemäß irgendeinem der Ansprüche 1 bis 8, bei dem die Vielzahl von Batterien N Batterien in der Nutzung und N Reservebatterien umfasst, die N Batterienpaare bilden, wobei das Elektrogerät abwechselnd von einer Batterie in der Nutzung und einer Reservebatterie einer der N Batterienpaare versorgt wird.

10. Verwaltungsverfahren der Ladung einer Vielzahl von Batterien gemäß irgendeinem der Ansprüche 1 bis 9, bei dem der vorbestimmte Schwellenwert in Abhängigkeit von den elektrischen Merkmalen der Reservebatterie und der Batterie in der Nutzung derart ausgewählt wird, dass der Ladezustand der Reservebatterie den vorbestimmten maximalen Ladezustand erreicht, wenn die Batterie in der Nutzung den vorbestimmten minimalen Ladezustand erreicht.

11. Verwaltungsverfahren der Ladung einer Vielzahl von Batterien, umfassend die folgenden Schritte:
• Liefern (S1) wenigstens einer Batterie, die an ein Elektrogerät angeschlossen ist und wenigstens eine Batterie in der Nutzung bildet,
• Liefern (S1) wenigstens einer Batterie, die von dem Elektrogerät abgehängt ist und wenigstens eine Reservebatterie bildet, wobei die Reservebatterie einen vorbestimmten Zwischenlade-Zustand aufweist, der von einem vollständigen Ladezustand und einem Null-Ladezustand unterschiedlich ist,
• Bestimmen (S2) wenigstens eines charakteristischen Parameterwertes des Ladezustandes der Batterie in der Nutzung,
• Vergleichen (S3) des Wertes des charakteristischen Parameters des Ladezustandes der Batterie in der Nutzung mit einem vorbestimmten Schwellenwert, wenn der Wert des charakteristischen Parameters des Ladezustandes der Batterie in der Nutzung nicht den vorbestimmten Schwellenwert erreicht, Zurückkehren zu dem vorherigen Schritt (S2) und andernfalls
• Auslösen (S4) der Ladung einer Reservebatterie bis zu einem vorbestimmten maximalen Ladezustand, der den vorbestimmten Zwischenlade-Zustand übersteigt,
dann, wenn die Reservebatterie den vorbestimmten maximalen Ladezustand erreicht, die folgenden Schritte:
• Abhängen (S5) der Batterie in der Nutzung von dem Elektrogerät,
• Anschließen (S5) der Reservebatterie an das Elektrogerät zum Bilden einer neuen Batterie in der Nutzung.

## Claims

1. Method for managing the charging of a plurality of batteries comprising the following steps:
• supplying (S1) at least one battery connected to an electrical appliance and forming at least one battery in use,
• supplying (S1) at least one battery disconnected from the electrical appliance and forming at least one reserve battery, the reserve battery having a predetermined intermediate state of charge, different from a full state of charge and a zero state of charge,
• determining (S2) at least one parameter value characteristic of the state of charge of the battery in use,
• comparing (S3) the parameter value characteristic of the state of charge of the battery in use with a predetermined threshold, if the parameter value characteristic of the state of charge of the battery in use does not reach the predetermined threshold, returning to the preceding step (S2), and otherwise,
• triggering (S4) the charging of a reserve battery until a predetermined maximum state of charge is reached, which is higher than the predetermined intermediate state of charge,
then, when the battery in use reaches a predetermined minimum state of charge, the following steps:
• disconnecting (S5) the battery in use from the electrical appliance,
• connecting (S5) the reserve battery to the electrical appliance in order to form a new battery in use.

2. Method for managing the charging of a plurality of batteries according to claim 1, wherein the disconnected battery in use forms a new reserve battery and wherein the new reserve battery is charged until the predetermined intermediate state of charge is reached.

3. Method for managing the charging of a plurality of batteries according to one of claims 1 and 2, wherein the predetermined intermediate state of charge of a reserve battery is comprised between 50 % and 80 %.

4. Method for managing the charging of a plurality of batteries according to any of claims 1 to 3, wherein the charging speed of the reserve battery is dependent on the discharging speed of the battery in use, in such a way that the reserve battery reaches the predetermined maximum state of charge when the battery in use reaches the predetermined minimum state of charge.

5. Method for managing the charging of a plurality of batteries according to any of claims 1 to 4, wherein the predetermined maximum state of charge of the reserve battery is comprised between 90 and 100%.

6. Method for managing the charging of a plurality of batteries according to any of claims 1 to 5, wherein the parameter characteristic of the state of charge of the battery in use is chosen from the state of charge of the battery in use, and/or the speed of the changing in the state of charge of the battery in use according to time, and/or the remaining discharging time of the battery in use.

7. Method for managing the charging of a plurality of batteries according to any of claims 1 to 5, wherein the battery in use and the reserve battery have identical capacities.

8. Method for managing the charging of a plurality of batteries according to any of claims 1 to 7, wherein the battery in use and the reserve battery are connected to a data server by a communication network.

9. Method for managing the charging of a plurality of batteries according to any of claims 1 to 8, wherein the plurality of batteries comprises N batteries in use and N reserve batteries forming N pairs of batteries, the electrical appliance being supplied alternatively by a battery in use and a reserve battery of one of the N pairs of batteries.

10. Method for managing the charging of a plurality of batteries according to any of claims 1 to 9, wherein the predetermined threshold is chosen according to the electrical characteristics of the reserve battery and of the battery in use, in such a way that the state of charge of the reserve battery reaches the predetermined maximum state of charge when the battery in use reaches the predetermined minimum state of charge.

11. Method for managing the charging of a plurality of batteries comprising the following steps:
• supplying (S1) at least one battery connected to an electrical appliance and forming at least one battery in use,
• supplying (S1) at least one battery disconnected from the electrical appliance and forming at least one reserve battery, the reserve battery having a predetermined intermediate state of charge, different from a full state of charge and a zero state of charge,
• determining (S2) at least one parameter value characteristic of the state of charge of the battery in use,
• comparing (S3) the parameter value characteristic of the state of charge of the battery in use with a predetermined threshold, if the parameter value characteristic of the state of charge of the battery in use does not reach the predetermined threshold, returning to the preceding step (S2), and otherwise,
• triggering (S4) the charging of a reserve battery until the predetermined maximum state of charge is reached, which is higher than the predetermined intermediate state of charge,
then, when the reserve battery reaches the predetermined maximum state of charge, the following steps:
• disconnecting (S5) the battery in use from the electrical appliance,
• connecting (S5) the reserve battery to the electrical appliance in order to form a new battery in use.
